# EUROPEAN PATENT APPLICATION

(11) **EP 4 456 061 A1**
(43) Date of publication of application: **30.10.2024**
(21) Application number: 23170574.0
(22) Date of filing: 28.04.2023
(51) Int. Cl.: G10L 15/22, G10L 21/0216

(54) **A COMMUNICATION SYSTEM AND A COMMUNICATION METHOD**

(71) Applicant: Siemens Aktiengesellschaft, 80333 München (DE)
(72) Inventor: Baglan, Sezer, 34742 Kadiköy, Istanbul (TR); Cimenoglu, Erdem, 34800 Beykoz (TR); Dag, Fatih Mehmet, 35390 Karsiyaka/IZMIR (TR); Gonul, Mustafa, 34406 Kagithane (TR); Malkos, Sibel, 34340 Besiktas/Istanbul (TR); Ozer, Dilek, 34841 Maltepe (TR); Yillikci, Giray, 3450 USKUMRUKOY/SARIYER/ISTANBUL (TR)
(74) Representative: Siemens Patent Attorneys

(57) **Abstract**

The present invention relates to a communication system and a communication method for providing communication between humans and machines. The communication system comprises at least one array of microphones comprising a plurality of microphones wherein each of the microphones is adapted to receive sound signals; at least one microphone processor communicating with said microphones, wherein the microphone processor is adapted to determine the sound directions with respect to the array of microphones by analysing the sound signals received by the microphones, and wherein the microphone processor is further adapted to distinguish sound signals according to their sound direction with respect to the array of microphones; at least one natural language processing (NLP) device for analysing the sound signals coming from at least one direction with respect to the array of microphones to interpret commands within the analysed sound.

## Description

### Technical Field

Present invention is related to communication systems and methods for providing communication between humans and machines in an industrial environment.

### Background Art

Chatbots are software applications that utilize natural language processing (NLP) to interact with humans, and are deployed across diverse domains for communication purposes. In the smart phones, for instance, chatbot applications are used for receiving verbal user commands and informing the users about the result of the user command, e.g. answering various questions of the users.

Chatbot applications are employed in industrial settings as well. US2018129181A1 discloses chatbots for communicating with and controlling industrial machinery. Similar to the smart phone applications, verbal user commands are received and processed in industrial systems, users are then informed about the result of the user command.

In chatbot applications, users' verbal commands are captured through microphones, then the received audio is converted to text using a process called digitization. Subsequently, the text is analyzed using a natural language processing (NLP) application to determine the user's command. Based on the determined command, the chatbot performs necessary processes and generates a response for the user. The response can be provided in text format or converted to audio using text-to-speech (TTS) applications.

Chatbot applications are generally reliable in one-on-one communication scenarios, where a single user interacts with the chatbot. In such cases, user commands are accurately received and interpreted by the chatbot. Conversely, known chatbots face limitations in distinguishing between speech from multiple users. As a result, understanding user commands becomes challenging when there are multiple speakers involved. In industrial environments, usually more than one user is present, thus, conventional chatbot applications are not suitable for communicating with users. Therefore, there is a need for a communication system and method for providing communication between humans and chatbots in industrial settings.

### Brief Description of the Invention

According to the present invention, a communication system and a communication method for providing communication between humans and machines are provided. The communication system comprises, at least one array of microphones comprising a plurality of microphones wherein each of the microphones is adapted to receive sound signals; at least one microphone processor communicating with said microphones, wherein the microphone processor is adapted to determine the sound directions with respect to the array of microphones by analysing the sound signals received by the microphones, and wherein the microphone processor is further adapted to distinguish sound signals according to their sound direction with respect to the array of microphones; at least one natural language processing (NLP) device for analysing the sound signals coming from at least one direction with respect to the array of microphones to interpret commands within the analysed sound.

In another aspect, the invention relates to a communication method comprising the steps of receiving sound signals using at least one array of microphones; determining the sound directions with respect to the array of microphones by analysing the sound signals received by the microphones; distinguishing sound signals according to their sound direction with respect to the array of microphones; analysing the sound signals coming from at least one direction with respect to the array of microphones to determine commands within the analysed sounds.

According to the present invention, through the utilization of at least one array of microphones, different sound signals in an environment can be distinguished. Through analysing sound signals coming from different directions (i.e. different sound sources), different human speeches are distinguished from one another. Therefore, each distinctive human speech can be analysed by a natural language processing (NLP) device to correctly determine the user commands within.

### Object of the Invention

It is an object of the exemplary embodiment of the present invention to provide an efficient communication system and method for providing communication between humans and machines in an industrial environment.

### Description of Drawings

Figure 1 illustrates an exemplary block diagram of the communication system of the present invention.

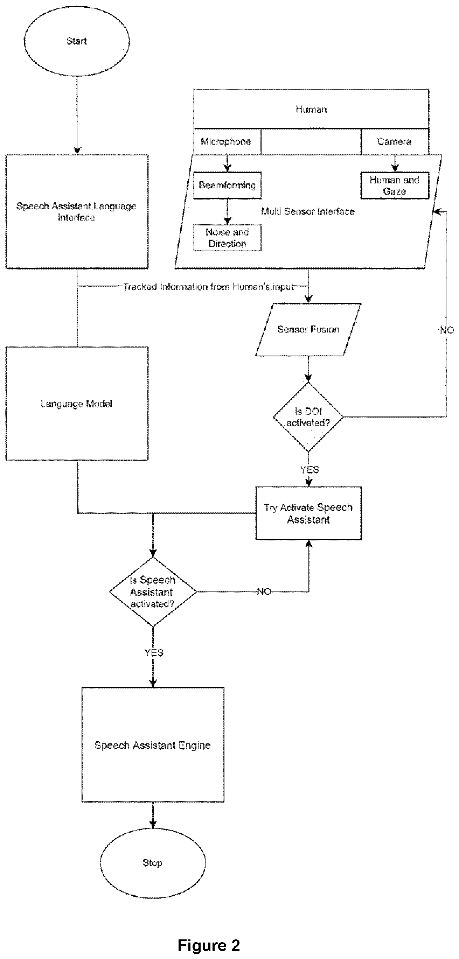

Figure 2 illustrates an exemplary flow-chart of the communication system according to the present invention.

The reference numbers used in figures possess the following meanings:

| | |
|---|---|
| Array of microphones | (1) |
| Microphone processor | (2) |
| Image sensor | (3) |
| Means for image processing | (4) |
| Means for sensor fusion | (5) |
| User interface device | (6) |

### Detailed Description of the Invention

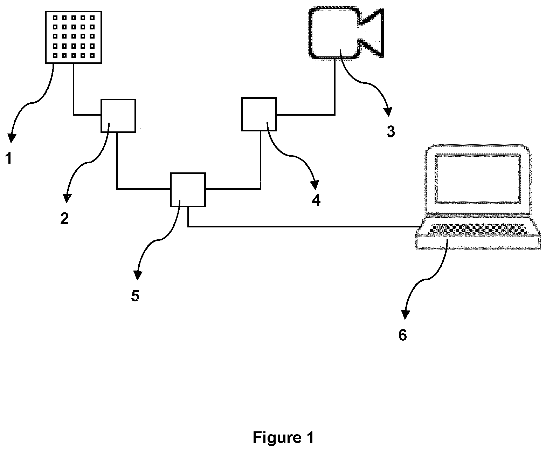

Referring to FIG. 1, communication system of the present application comprises at least one array of microphones (1) having a plurality of microphones wherein each of the microphones is adapted to receive sound signals. There is provided at least one microphone processor (2), which is in communication with the microphones. The microphone processor (2) is adapted to determine the sound directions with respect to the array of microphones (1) by analysing the sound signals received by the microphones. The microphone processor (2) is further adapted to distinguish sound signals according to their sound direction with respect to the array of microphones (1). The communication system of the present invention further comprises at least one natural language processing (NLP) device for analysing the sound signals coming from at least one direction with respect to the array of microphones (1) to interpret commands within the analysed sound.

In an exemplary embodiment of the present invention, the communication system is employed within an industrial environment, which involves the presence of multiple humans, such as workers, as well as multiple machines that may generate sound, such as noise. In such an environment, the communication system differentiates the sound of a human speaking from the sound of other users and machines as a preliminary step to interpreting a user command. This is achieved by through utilization of the array of microphones (1) and the microphone processor (2). When a sound emanates from a particular source, a generated sound signal is received from separate microphones of the array of microphones (1) with different latencies. For instance, the generated sound signal reaches the microphone closest to the sound source before reaching other microphones. Thus, by comparing the sound signal receiving times (i.e. latencies) of separate microphones, It becomes possible to ascertain the direction of the sound in relation to the array of microphones. (1). When the sound direction is determined for the separate sounds, the sounds (or sound sources) are distinguished from one another according to their sound direction information. Accordingly, by utilizing the sound direction information, distinctive identification becomes possible between speaking humans and machines as well. When a human speaks, his/her sound is distinguished (isolated) from the other sounds and analysed by the natural language processing (NLP) device for the purpose of interpreting commands. In scenarios where there are multiple humans speaking simultaneously (with one another or with communication system), their speech is isolated from one another. Consequently, the commands of each human can be understood without the interference of mixed speeches.

In an exemplary embodiment of the present invention, at least one microphone processor (2) is adapted to use spatial filtering (beamforming) for determining the sound directions with respect to the array of microphones (1). As known to a skilled person, beamforming is a signal processing technique used in sensor arrays for directional signal transmission or reception. It could be used for a countless purposes estimating the direction of arrival, detecting the presence of the signal, and enhancing a desired signal from its measurements corrupted by noise, competing sources and the outcomes. Determining the sound directions may thus comprise using spatial filtering (beamforming) for determining the sound directions with respect to the array of microphones (1).

In an exemplary embodiment of the present invention, the microphone processor (2) is adapted to use noise reduction. The noise reduction application relies on multiple microphones for distinguishing noises. The microphone processor (2) employs sound signals captured by the array of microphones (1), which are then used to differentiate and remove undesirable noises. Therefore, sound signals coming from users can be analysed more accurately by the natural language processing (NLP) device. The noise reduction is preferably performed after determining the sound directions with respect to the array of microphones (1) by analysing the sound signals received by the microphones.

In an exemplary embodiment of the invention, the communication system comprises at least one image sensor (3) (such as a camera). In such an embodiment, communication system further comprises at least one means for image processing (4) to analyze the images captured by the image sensor (3) According to this embodiment, by utilizing the image processing techniques, the capability to detect and identify sound sources, such as human speech in an industrial setting, can be achieved.

In an exemplary embodiment of the invention, data gathered by array of microphones (1) and image sensor (3) may be utilized together for improving the accuracy. The communication system may comprise at least one means for sensor fusion (5) for fusing the data gathered by array of microphones (1) and image sensor (3). In this embodiment, by fusing the data gathered by array of microphones (1) and image sensor (3), the ability to differentiate between human-to-human conversation and human-to-communication system interaction can be achieved. Thus, when a sound signal is received from the direction of a human, the image (or the video) of the human is received by the image sensor (3). Through analysing the image, direction or focus of the human is determined by employing an image processing technique known from the art. If another human is present in the determined direction or focus, it is concluded that the human is engaged in conversation with another human.. Therefore, in this situation, sound signals coming from the human may not be analysed by the natural language processing device.

On the other hand, if there are no other humans in the direction or focus of the speaking individual, or if it is determined that the speaking individual is looking towards a communication system, such as an image sensor (3), it is concluded that the human is engaged in communication with the system.

Therefore, sound signals received by the human is analysed by at least one natural language processing device.

In an exemplary embodiment of the invention, the direction of interest (DOI) according to the distinguished sound signals can be determined. In such an embodiment, any human speech may be considered as the direction of interest, when distinguishing sound signals according to their sound direction with respect to the array of microphones (1). Thus, sound signals coming from only the direction of interest can be processed for the following steps.

In an exemplary embodiment of the invention, communication system may comprise a means for a speech assistant (such as a chatbot), which is in communication with at least one natural language processing device. In such an embodiment, when the natural language processing device identifies commands within a sound signal, the commands are sent to the speech assistant component for processing. The speech assistant component may execute the identified commands and provide information to users regarding the results. The communication system may comprise at least one user interface device (6) (such as a computer, tablet or smartphone etc) for providing information, such as audio and/or visual information, to the users. In such configuration, the natural language processing (NLP) device and/or means for speech assistant may be an application run on the user interface device.

According to the present invention, by using at least one array of microphones (1), different sound signals in an environment can be distinguished. By analysing sound signals coming from different directions (different sound sources), different human speeches are distinguished from each other. Therefore, each distinctive human speech is able to be analysed by a natural language processing (NLP) device to correctly determine user commands within.

## Claims

1. A communication system for providing communication between humans and machines **characterized by** comprising,
- at least one array of microphones (1), comprising plurality of microphones wherein each microphone is adapted to receive sound signals;
- at least one microphone processor (2) communicating with said microphones, wherein the microphone processor (2) is adapted to determine the sound directions with respect to the array of microphones (1) by analysing the sound signals received by the microphones, and wherein the microphone processor (2) is further adapted to distinguish sound signals according to their sound direction with respect to the array of microphones (1);
- at least one natural language processing device for analysing the sound signals coming from at least one direction with respect to the array of microphones (1) to interpret commands within the analysed sound.

2. A communication system according to claim 1, **characterized in that** the at least one microphone processor (2) is adapted to use spatial filtering for determining the sound directions with respect to the array of microphones (1).

3. A communication system according to claims 1 or 2, **characterized in that** the at least one microphone processor (2) is adapted to use noise reduction.

4. A communication system according to any one of the preceding claims **characterized by** comprising at least one image sensor (3).

5. A communication system according to claim 4, **characterized by** comprising at least one means for image processing (4) for analysing the images captured by the image sensor (3).

6. A communication system according to claims 4 or 5, **characterized by** further comprising at least one means for sensor fusion (5) for fusing the data gathered by array of microphones (1) and image sensor (3).

7. A communication system according to any one of the preceding claims **characterized by** comprising at least one means for speech assistant, the means being in communication with at least one natural language processing device.

8. A communication system according to any one of the preceding claims **characterized by** comprising at least one user interface device (6) for providing information to users.

9. A communication method for providing communication between humans and machines **characterized by** comprising the following steps of:
i. receiving sound signals using at least one array of microphones (1);
ii. determining the sound directions with respect to the array of microphones (1) by analysing the sound signals received by the microphones;
iii. distinguishing sound signals according to their sound direction with respect to the array of microphones (1);
iv. analysing the sound signals coming from at least one direction with respect to the array of microphones (1) to determine commands within the analysed sounds.

10. A communication method according to claim 9, **characterized in that** the step ii comprises using spatial filtering for determining the sound directions with respect to the array of microphones (1).

11. A communication method according to claims 9 or 10, **characterized by** comprising the step of performing noise reduction to sound signals received by array of microphones (1).

12. A communication method according to claim 11, **characterized in that** it is performed after the step ii.

13. A communication method according to any one of the claims 9-12, **characterized by** comprising image capturing using at least one image sensor (3); and performing image processing to captured image in order to determine sound sources.

14. A communication method according to claim 13, **characterized by** comprising fusing the data gathered by array of microphones (1) and image sensor (3).

15. A communication method according to any one of the claims 9-14, **characterized by** comprising determining direction of interest according to the distinguished sound signals.

16. A communication method according to any one of the claims 9-15, **characterized by** further comprising sending commands determined in the step iv to a means for speech assistant; performing said commands; and providing information about the result of the performed command.
